# FASCICULE DE BREVET EUROPEEN

(11) **EP 4 584 520 B1**
(45) Date de publication et mention de la délivrance du brevet: **01.04.2026**
(21) Numéro de dépôt: 23761953.1
(22) Date de dépôt: 01.09.2023
(51) Int. Cl.: F16K 3/20, F16K 3/312, F16K 27/04

(54) **OBTURATEUR EN LIGNE DE GRAND DIAMETRE COMPORTANT UNE PLAQUE D'OBTURATION**
INLINE-VERSCHLUSS MIT GROSSEM DURCHMESSER MIT EINER VERSCHLUSSPLATTE
LARGE-DIAMETER IN-LINE OBTURATOR WITH A CLOSURE PLATE

(30) Priorité: 07.09.2022 FR 2208940
(43) Date de publication de la demande: 16.07.2025
(73) Titulaire: ONIS, 13410 Lambesc (FR)
(72) Inventeur: FUMANAL, Yann, 13330 Pelissanne (FR)
(74) Mandataire: GPI Brevets
(86) Numéro de dépôt international: PCT/EP2023/074079
(87) Numéro de publication internationale: WO 2024/052238

(56) Documents cités:
- CN-U- 201 599 430
- DE-A1- 2 227 386
- DE-A1- 2 719 164
- FR-A- 1 357 657
- US-A- 3 367 625
- US-A- 4 278 236

## Description

La présente invention concerne le domaine des obturateurs en ligne généralement destinés à être agencés sur des conduites ou canalisations et permettant au moyen d'une plaque d'obturation de réaliser la circulation ou l'arrêt d'un fluide à l'intérieur des conduites ou canalisations.

De façon connue, une telle plaque d'obturation peut être mobile en translation ou en rotation par rapport à un corps de l'obturateur en ligne. De tels obturateurs en ligne ont notamment été décrits dans les documents FR 3 041 407, FR 3 051 878 et FR 3 080 665.

Les obturateurs en ligne connus comportent alors des moyens de serrage/écartement permettant de serrer, et inversement, d'écarter simultanément un premier demi-corps et un second demi-corps par rapport à la plaque d'obturation.

De tels obturateurs en ligne sont adaptés pour les conduites de faibles et moyennes dimensions par exemple présentant une section de passage pour le fluide d'un diamètre inférieur ou égal à 1300mm (millimètre). Ces obturateurs en ligne nécessitent en effet que les conduites soient aptes à se déformer élastiquement grâce aux moyens de serrage/écartement qui sont généralement actionnés manuellement par un opérateur.

En revanche, pour les conduites de grandes dimensions, par exemple présentant une section de passage pour le fluide d'un diamètre supérieur à 1300mm (millimètre), d'autres types d'obturateurs en ligne ont été développés et ne nécessitent pas que les conduites soient aptes à se déformer élastiquement.

Ce type de d'obturateur en ligne pour les conduites de grandes dimensions comporte alors un système de serrage/écartement permettant de serrer, et inversement, d'écarter au moins une pièce de serrage mobile par rapport au corps suivant au moins un degré de liberté en translation. Un tel degré de liberté en translation de la ou des pièces de serrage est alors orienté selon une direction de translation parallèle à la direction de circulation fluidique dans le corps de l'obturateur.

Un tel corps comporte un premier demi-corps et un second demi-corps qui restent toujours immobiles l'un par rapport à l'autre tandis que la pièce de serrage se déplace en translation selon la direction de translation pour serrer ou libérer la plaque d'obturation si nécessaire.

La ou les pièces de serrage sont alors agencées entre la plaque d'obturation et l'un des demi-corps qui sera désigné par suite comme étant le premier demi-corps à des fins de simplification. Bien entendu, cette ou ces pièces de serrage mobile peuvent être alternativement agencées entre la plaque d'obturation et le second demi-corps.

Les systèmes de serrage/écartement peuvent notamment comporter alors des ressorts en forme de U sollicités et aptes à se déformer en torsion afin de transmettre un effort de compression à la ou aux pièces de serrage selon la direction de translation.

Cependant, en cas de rupture de l'un des ressorts en forme de U, il est alors nécessaire de déposer l'obturateur en ligne des canalisations puis de le démonter entièrement afin pour pouvoir procéder au remplacement du ressort cassé.

Une telle opération de maintenance est particulièrement complexe et longue à réaliser compte tenu de la taille et de la masse très importante de ce type d'obturateur en ligne.

Les documents FR 1 357 657, DE 22 27 386 et DE 27 19 164 divulguent quant à eux des vannes à gaz pour tubes de grande section comportant une soupape de fermeture constituée par une lunette et par une pièce de fermeture.

En outre, ces vannes comportent un système de serrage/écartement permettant de serrer, et inversement, d'écarter une pièce de serrage mobile en translation. Un tel système de serrage/écartement comporte alors une pluralité d'ensembles déformables élastiquement en compression agencés de manière équirépartie en azimut autour d'une direction de translation de la pièce de serrage, chaque ensemble pouvant comporter un ressort hélicoïdal et un arbre de guidage.

Cependant, comme pour les systèmes comportant des ressorts en forme de U, en cas de rupture de l'un des ressorts hélicoïdaux, il est alors nécessaire de déposer l'obturateur en ligne des canalisations puis de le démonter entièrement afin pour pouvoir procéder au remplacement du ressort cassé.

La présente invention a alors pour objet de proposer un obturateur en ligne alternatif muni d'au moins une pièce de serrage mobile translation. En effet, un but de l'invention est de fournir une solution pour permettre de réaliser des opérations de maintenance à la fois simples et rapides sur des systèmes de serrage/écartement d'un tel type d'obturateur en ligne.

Comme déjà évoqué, l'invention concerne donc un obturateur en ligne comportant :
- une plaque d'obturation mobile dans un plan (P) entre une position d'obturation interdisant une circulation fluidique dans une zone intérieure de l'obturateur en ligne et une position de circulation permettant la circulation fluidique selon une direction de circulation fluidique, la plaque d'obturation comportant une portion pleine pour interdire la circulation fluidique et une portion ajourée pour permettre la circulation fluidique,
- un corps comportant un premier demi-corps et un second demi-corps agencés respectivement de part et d'autre du plan (P), les premier et second demi-corps présentant respectivement un premier orifice et un second orifice permettant la circulation fluidique, et
- un système de serrage/écartement permettant de serrer, et inversement, d'écarter au moins une pièce de serrage, ladite au moins une pièce de serrage étant mobile par rapport au corps suivant au moins un degré de liberté en translation selon une direction de translation parallèle à la direction de circulation fluidique, ladite au moins une pièce de serrage étant agencée entre la plaque d'obturation et le premier demi-corps, le système de serrage/écartement comportant un manchon d'étanchéité déformable élastiquement s'étendant entre le premier demi-corps et ladite au moins une pièce de serrage.

Le système de serrage/écartement comporte une première bague de poussée solidaire du premier demi-corps, une seconde bague de poussée solidaire de ladite au moins une pièce de serrage, une pluralité d' ensembles déformables élastiquement en compression et agencés de manière équirépartie en azimut autour de la direction de translation, chaque ensemble comportant un ressort hélicoïdal et un arbre de guidage comportant un axe de révolution orienté parallèlement à la direction de translation, le ressort hélicoïdal étant agencé entre la première bague de poussée et la seconde bague de poussée, le ressort hélicoïdal étant agencé autour de l'arbre de guidage.

Selon l'invention, l'obturateur en ligne se caractérise en ce que la première bague de poussée comporte plusieurs premiers tronçons agencés de manière équirépartie en azimut autour de la direction de translation et la seconde bague de poussée comporte plusieurs seconds tronçons agencés de manière équirépartie en azimut autour de la direction de translation.

Autrement dit, le système de serrage/écartement permet à un opérateur de pouvoir serrer ou libérer la plaque d'obturation lorsqu'il est nécessaire de la déplacer de sa position de circulation à sa position d'obturation ou inversement de sa position d'obturation à sa position de circulation.

Ce serrage de la plaque d'obturation est alors réalisé entre ladite au moins une pièce de serrage et le second demi-corps. Le premier et le second demi-corps sont fixes l'un par rapport à l'autre et ladite au moins une pièce de serrage est quant à elle libre de se déplacer en translation selon la direction de translation entre les premier et second demi-corps.

L'expression « le ressort hélicoïdal étant agencé entre la première bague de poussée et la seconde bague de poussée » signifie que le ressort hélicoïdal peut transmettre son effort de poussée à la première bague de poussée et la seconde bague de poussée directement ou indirectement.

Par suite, le ressort hélicoïdal peut venir au contact directement de faces planes de la première bague de poussée et de la seconde bague de poussée ou peut venir au contact d'une pièce intermédiaire agencée quant à elle au contact de la première bague de poussée ou de la seconde bague de poussée.

En outre, chaque ensemble déformable est configuré pour être monté et démonté sur un obturateur en ligne indépendamment des autres ensembles déformables et sans avoir besoin de déposer l'obturateur en ligne des canalisations.

Un ressort hélicoïdal usé, endommagé ou cassé d'un ensemble déformable peut ainsi être remplacé individuellement des autres ensembles déformables sur un obturateur en ligne monté sur des canalisations.

Pour ce faire, des moyens de compression et/ou préhension peuvent être utilisés pour comprimer et/ou pour extraire un ensemble déformable. Une fois comprimé, l'ensemble déformable peut alors être extrait selon une direction radiale par rapport à la direction de circulation fluidique de l'obturateur en ligne.

Par ailleurs, les différents ensembles sont agencés symétriquement tout autour du manchon d'étanchéité déformable élastiquement s'étendant axialement suivant la direction de translation entre le premier demi-corps et ladite au moins une pièce de serrage.

De même, les premiers tronçons de la première bague de poussée et les seconds tronçons de la seconde bague de poussée sont également respectivement agencés symétriquement tout autour du manchon d'étanchéité déformable élastiquement s'étendant axialement suivant la direction de translation entre le premier demi-corps et ladite au moins une pièce de serrage.

En outre, un tel agencement en tronçons des première et seconde bagues de poussée permet également d'assurer une poussée homogène générée par le système de serrage/écartement entre la plaque d'obturation et le premier demi-corps et d'assurer une étanchéité optimale.

L'obturateur en ligne peut par ailleurs comprendre une ou plusieurs des caractéristiques qui suivent, prises seules ou en combinaison.

En pratique, l'arbre de guidage peut comporter une tête présentant un degré de liberté en rotation par rapport à la seconde bague de poussée, le degré de liberté en rotation étant autour d'un axe de rotation confondu avec l'axe de révolution.

Par suite, l'arbre de guidage peut pivoter sur lui-même autour de son axe de révolution. L'arbre de guidage est alors guidé en rotation au moyen de sa tête par rapport à la seconde bague de poussée.

Avantageusement, la tête peut comporter un premier épaulement en appui d'une part contre une première extrémité du ressort hélicoïdal et d'autre part contre une première face de la seconde bague de poussée.

Par suite, le premier épaulement de la tête de l'arbre de guidage forme une pièce intermédiaire agencée au contact du ressort hélicoïdal et de la seconde bague de poussée.

Selon un exemple de réalisation de l'invention, le premier épaulement peut comporter une pluralité de trous agencés radialement par rapport à l'axe de révolution et de manière équirépartie en azimut, la pluralité de trous permettant un actionnement en rotation de l'arbre de guidage autour de l'axe de rotation et par rapport à la seconde bague de poussée avec un outil.

Les trous peuvent être avantageusement de même diamètre et non traversant. Ces trous sont alors débouchants uniquement sur une face cylindrique externe du premier épaulement. Ainsi, de tels trous permettent alors à un opérateur muni de l'outil de faire pivoter l'arbre de guidage de guidage autour de l'axe de rotation pour réaliser si nécessaire une compression d'un ressort hélicoïdal d'un ensemble déformable.

En outre, un tel outil peut présenter au niveau d'au moins une excroissance une section mâle de forme complémentaire à une section femelle de la pluralité de trous. Un tel outil peut se présenter sous la forme d'une tige, d'un bras, d'une barre de forme cylindrique apte à être inséré dans chacun des trous, l'un après l'autre après avoir fait pivoter l'arbre de guidage sur lui-même d'un angle de quelques degrés, par exemple d'un angle compris entre 0 degré et 45 degrés.

En pratique, ledit au moins un ensemble peut comporter une butée axiale solidarisée avec une portion cylindrique de la tête, la portion cylindrique s'étendant selon l'axe de révolution depuis le premier épaulement, la portion cylindrique traversant un alésage cylindrique de forme complémentaire ménagé dans la seconde bague de poussée, la butée axiale comportant un deuxième épaulement au contact d'une seconde face de la seconde bague de poussée, la seconde face étant agencée parallèlement à la première face et perpendiculairement à l'axe de révolution.

Une telle butée axiale et le deuxième épaulement qu'elle comporte permet ainsi de maintenir axialement l'arbre de guidage par rapport à la seconde bague de poussée. De plus, lorsque l'arbre de guidage est pivoté sur lui-même autour de l'axe de rotation, le deuxième épaulement peut alors se rapprocher de la première bague de poussée pour comprimer le ressort hélicoïdal.

La portion cylindrique de la tête coopérant avec l'alésage cylindrique de forme complémentaire ménagé dans la seconde bague de poussée permet quant à elle une liberté de mouvement en rotation correspondant au degré de liberté en rotation de l'arbre de guidage par rapport à la seconde bague de poussée.

En outre, une telle butée axiale peut être rapportée et solidarisée avec une extrémité libre de la portion cylindrique de la tête une fois introduite dans l'alésage cylindrique de la seconde bague de poussée. Des moyens de solidarisation réversible tels que des vis ou des écrous peuvent alors permettre de solidariser la butée axiale avec la tête de l'arbre de guidage pour former un ensemble monolithique agencé en liaison de type pivot à un degré de liberté en rotation selon l'axe de rotation par rapport à la seconde bague de poussée.

Avantageusement, ledit au moins un ensemble peut comporter un écrou présentant un alésage taraudé vissé avec une portion filetée de l'arbre de guidage, l'écrou étant solidarisé avec la première bague de poussée, à savoir sans degré de liberté sous une réaction en traction transmise par l'arbre de guidage à l'écrou.

Un tel écrou est alors agencé en liaison de type glissière par rapport à la première bague de poussée et présente par ailleurs une butée axiale formant une liaison de type appui plan avec la première bague de poussée. Un ou plusieurs méplats agencés sur une face externe de l'écrou peuvent ainsi permettre d'empêcher une rotation relative de l'écrou par rapport à la première bague de poussée autour d'un axe de translation confondu avec l'axe de révolution.

Un troisième épaulement ménagé sur l'écrou peut quant à lui former la butée axiale et permettre de supprimer une translation suivant l'axe de translation et deux rotations relatives entre l'écrou et la première bague de poussée suivant deux axes perpendiculaires entre eux et perpendiculaires à l'axe de translation.

Le serrage de l'arbre de guidage dans l'écrou permet alors de réduire la distance séparant la tête de l'arbre de guidage de la première bague de poussée et par conséquent de réduire la distance séparant la première bague de poussée et la seconde bague de poussée.

Inversement, le desserrage de l'arbre de guidage dans l'écrou permet alors d'augmenter la distance séparant la tête de l'arbre de guidage de la première bague de poussée et par conséquent d'augmenter la distance séparant la première bague de poussée et la seconde bague de poussée.

Avantageusement, chaque ensemble de la pluralité d'ensembles peut coopérer avec un premier tronçon de la première bague de poussée et un second tronçon de la seconde bague de poussée, le premier tronçon étant agencé en regard du second tronçon suivant l'axe de révolution de l'arbre de guidage de l'ensemble.

En d'autres termes, lorsque qu'un ensemble est retiré de l'obturateur en ligne pour procéder au remplacement d'un ressort hélicoïdal, un premier tronçon de la première bague de poussée et un second tronçon de la seconde bague de poussée sont également extraits de l'obturateur en ligne.

Par suite, un ensemble et un couple comportant un premier tronçon de la première bague de poussée et un second tronçon de la seconde bague de poussée forment un groupe de pièces liées entre elles et déformables en compression et en détente selon l'axe de translation.

En outre des échancrures peuvent être ménagées entre chacun des premiers tronçons et/ou entre chacun des seconds tronçons de manière à faciliter la mise en place radiale de chacun des groupes de pièces les uns à coté des autres autour de la direction de translation.

Selon un autre exemple de réalisation de l'invention, le manchon d'étanchéité peut comporter une première portion annulaire coopérant avec une première portion cylindrique de la première bague de poussée et une seconde portion annulaire coopérant avec une seconde portion cylindrique de la seconde bague de poussée.

Ainsi, la première portion annulaire peut être agencée de manière coaxiale avec la seconde portion annulaire. Ces première et seconde portions annulaires peuvent permettre de servir de support respectivement aux première et seconde portions cylindriques. De telles portions annulaires peuvent également permettre un centrage et un positionnement précis de chacune des portions cylindriques de la première bague de poussée et de la seconde bague de poussée.

De plus, un tel manchon d'étanchéité peut comporter une portion déformable agencée entre la première portion annulaire la seconde portion annulaire. Une telle portion déformable peut en outre comporter des ondulations formées par une tôle de révolution centrée autour de la direction de translation de l'obturateur en ligne.

L'invention et ses avantages apparaîtront avec plus de détails dans le cadre de la description qui suit avec des exemples donnés à titre illustratif en référence aux figures annexées qui représentent :
la figure 1, une vue en coupe en perspective d'un obturateur en ligne selon l'invention,
la figure 2, une vue en perspective partielle d'un système de serrage/écartement équipant un tel obturateur, conformément à l'invention,
la figure 3, une vue en perspective partielle d'un système de serrage/écartement équipant un tel obturateur, conformément à l'invention,
la figure 4, une vue en coupe partielle d'un système de serrage/écartement équipant un tel obturateur, conformément à l'invention,
la figure 5, une autre vue en perspective partielle d'un système de serrage/écartement équipant un tel obturateur, conformément à l'invention, et
la figure 6, une autre vue en perspective partielle d'un système de serrage/écartement équipant un tel obturateur, conformément à l'invention.

En outre, les éléments présents dans plusieurs figures distinctes peuvent être affectés d'une seule et même référence.

Comme déjà évoqué l'invention se rapporte à un obturateur en ligne comportant une plaque d'obturation mobile en translation ou en rotation entre une position d'obturation arrêtant une circulation fluidique au travers de l'obturateur en ligne et une position de circulation permettant la circulation fluidique.

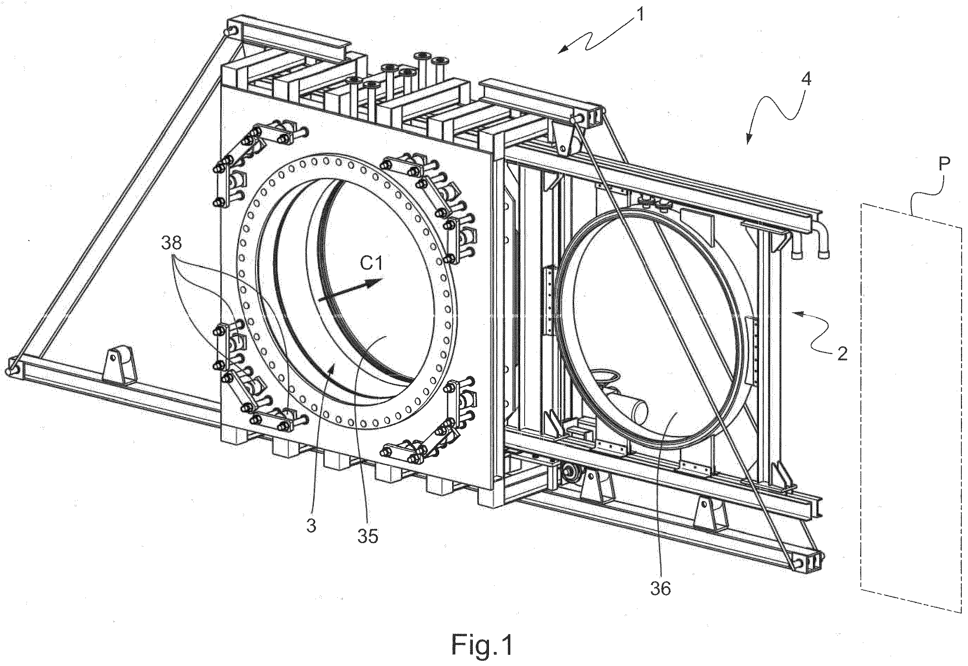

Tel que représenté à la figure 1, un tel obturateur en ligne 1 comporte donc une plaque d'obturation 2 apte à se déplacer au moins dans un plan P de manière à permettre ou interdire une circulation fluidique dans une zone intérieure 3 de l'obturateur en ligne 1. Dans la position de circulation de la plaque d'obturation 2, une portion ajourée de la plaque d'obturation 2 permet alors la circulation fluidique selon une direction de circulation fluidique C1.

La plaque d'obturation 2 comporte également une portion pleine pour interdire la circulation fluidique par exemple pour procéder à une opération de manutention sur une canalisation agencée en aval de l'obturateur en ligne 1 selon la direction de circulation fluidique C1. Une telle portion pleine 35 est ici représentée comme étant positionnée dans la zone intérieure 3 de l'obturateur en ligne 1, la portion ajourée 36 est quant à elle représentée dans une zone extérieure 4 de l'obturateur en ligne 1.

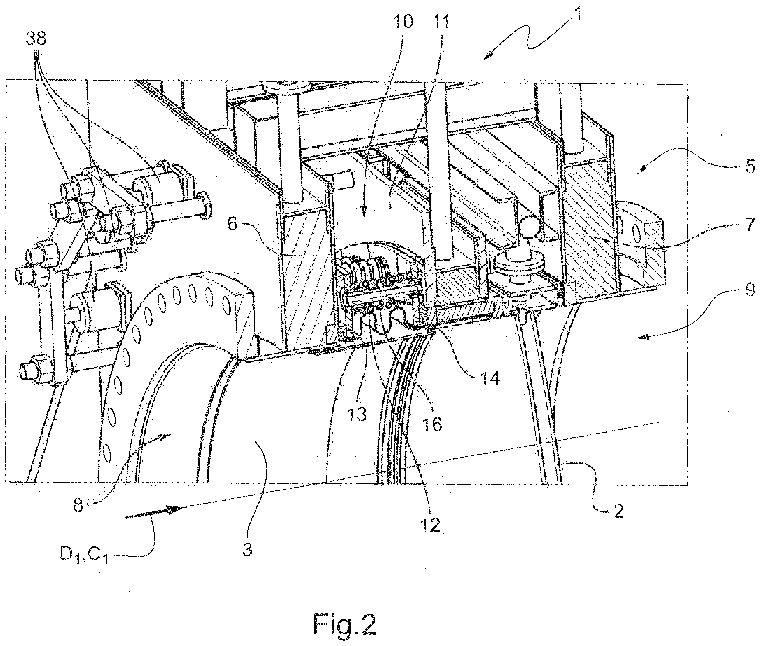

En outre tel que représenté à la figure 2, l'obturateur en ligne 1 comporte également un corps 5 comportant un premier demi-corps 6 et un second demi-corps 7 agencés respectivement de part et d'autre du plan P. De tels premier demi-corps 6 et second demi-corps 7 sont agencés de manière solidaire l'un par rapport à l'autre et ne présentent par conséquent aucun degré de liberté entre eux.

Le premier demi-corps 6 présente ainsi un premier orifice 8 et le second demi-corps 7 présente un second orifice 9 permettant la circulation fluidique au travers de l'obturateur en ligne 1 lorsque la portion ajourée est placée dans la zone intérieure 3 de l'obturateur en ligne 1.

L'obturateur en ligne 1 comporte aussi un système de serrage/écartement 10 permettant de serrer, et inversement, d'écarter au moins une pièce de serrage 11. Cette ou ces pièces de serrage 11 sont alors mobiles par rapport au corps 5 suivant au moins un degré de liberté en translation selon une direction de translation D1 parallèle à la direction de circulation fluidique C1. Des moyens de commandes manuels ou motorisés tels que par exemple des vérins hydrauliques 38 permettent ainsi de déplacer la ou les pièces de serrage 11 par rapport au corps 5.

Par ailleurs, cette ou ces pièces de serrage 11 sont ici positionnées entre la plaque d'obturation 2 et le premier demi-corps 6. Cependant, en retournant l'orientation de l'obturateur en ligne 1 par rapport à la direction de circulation fluidique C1, cela peut inverser le positionnement relatif du premier demi-corps 6 et second demi-corps 7. Par suite, sans sortir de l'objet de l'invention, cette ou ces pièces de serrage 11 peuvent également être positionnées entre la plaque d'obturation 2 et le second demi-corps 7.

Un système de serrage/écartement 10 comporte également un manchon d'étanchéité 12 déformable élastiquement s'étendant entre le premier demi-corps 6 et la ou les pièces de serrage 11. Ce manchon d'étanchéité 12 permettant alors d'éviter une fuite du fluide présent dans le la zone intérieure 3 de l'obturateur en ligne 1 quelle que soit la position de la ou des pièces de serrage 11 par rapport au corps 5.

Un tel système de serrage/écartement 10 comporte aussi une première bague de poussée 13 solidaire du premier demi-corps 6 sous un effort de compression transmis par un ressort hélicoïdal 16, 16' à la première bague de poussée 13 et une seconde bague de poussée 14 solidaire quant à elle de la ou des pièces de serrage 11 sous un effort de compression transmis par le ressort hélicoïdal 16, 16' à la seconde bague de poussée 14.

Par l'emploi du mot « solidaire », on entend désigner ainsi que, par exemple lors de l'utilisation du système de serrage/écartement 10, la première bague de poussée 13 peut être maintenue au contact du premier demi-corps 6 et que la seconde bague de poussée 14 peut être maintenue au contact de la ou des pièces de serrage 11.

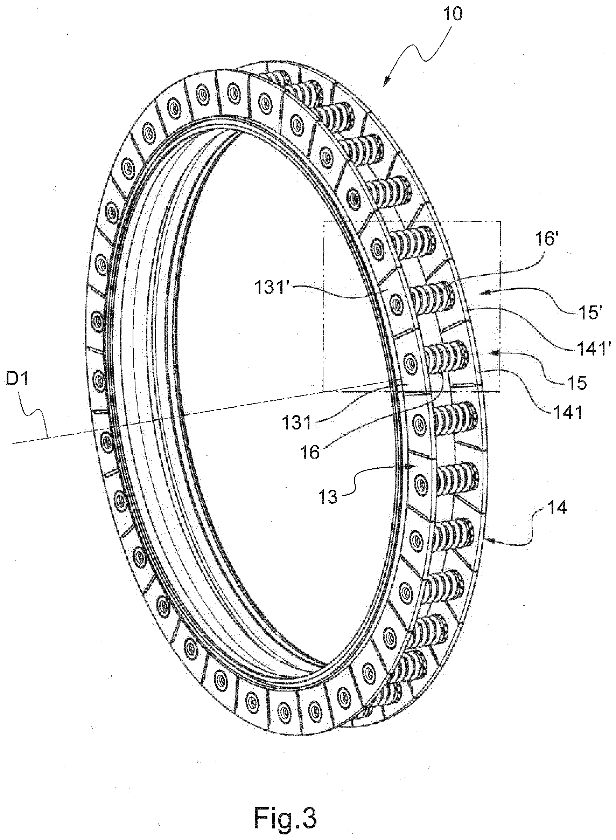

Tel que représenté plus en détail aux figures 3 à 6, un tel système de serrage/écartement 10 comporte au moins un ensemble 15, 15' déformable élastiquement en compression comportant un ressort hélicoïdal 16, 16' et un arbre de guidage 17, 17' comportant un axe de révolution R1, R2 orienté parallèlement à la direction de translation D1.

Le ressort hélicoïdal 16, 16' de chaque ensemble 15, 15' est ainsi agencé entre la première bague de poussée 13 et la seconde bague de poussée 14 et s'étend par ailleurs autour de l'arbre de guidage 17, 17'.

Tel que représenté, la première bague de poussée 13 et la seconde bague de poussée 14 coopèrent également avec le manchon d'étanchéité 12.

Un tel manchon d'étanchéité 12 comporte alors une première portion annulaire 121 et une seconde portion annulaire 122 et une portion déformable 123 agencée entre la première portion annulaire 121 et la seconde portion annulaire 122. Une telle portion déformable 123 peut en outre comporter des ondulations 124, 125 formées par une tôle de révolution centrée autour de la direction de translation D1 de l'obturateur en ligne 1.

La première portion annulaire 121 coopère avec une première portion cylindrique 130 de la première bague de poussée 13 et la seconde portion annulaire 122 coopère avec une seconde portion cylindrique 140 de la seconde bague de poussée 14.

Tel que représenté plus en détail sur la figure 3, l'obturateur en ligne 1 peut comporter une pluralité d'ensembles 15, 15' agencés de manière équirépartie en azimut autour de la direction de translation D1.

Un tel agencement des différents ensembles 15, 15' permet notamment à n'importe quel ensemble 15, 15' d'être retiré de l'obturateur en ligne 1 pour procéder au remplacement d'un ressort hélicoïdal 16, 16'.

Pour ce faire, la première bague de poussée 13 comporte plusieurs premiers tronçons 131, 131' agencés de manière équirépartie en azimut autour de la direction de translation D1 et la seconde bague de poussée 14 comporte également plusieurs seconds tronçons 141, 141' agencés de manière équirépartie en azimut autour de la direction de translation D1.

Par suite, lorsqu'un opérateur souhaite remplacer le ressort 16, un premier tronçon 131 de la première bague de poussée 13 et un second tronçon 141 de la seconde bague de poussée 14 sont également extraits de l'obturateur en ligne 1. Une ou des encoches peuvent être ménagées entre deux premiers tronçons 131, 131'consécutifs et/ou entre deux seconds tronçons 141, 141' consécutifs pour faciliter la préhension de ces tronçons indépendamment les uns des autres.

Par suite, un ensemble 15, un premier tronçon 131 de la première bague de poussée 13 et un second tronçon 141 de la seconde bague de poussée 14 forment un groupe de pièces liées entre elles et déformables en compression et en détente selon un axe de translation confondu avec l'axe de révolution R1.

En outre, des échancrures 132, 132', 142, 142' peuvent être ménagées entre chacun des premiers tronçons 131, 13' et/ou entre chacun des seconds tronçons 141, 141' de manière à faciliter la mise en place radiale ou une préhension de chacun des groupes de pièces les uns à coté des autres autour de la direction de translation D1.

En outre, chaque ensemble 15, 15' coopère alors avec un premier tronçon 131, 131' de la première bague de poussée 13 et un second tronçon 141, 141' de la seconde bague de poussée 14. Chaque premier tronçon 131, 131' est par ailleurs respectivement agencé en regard d'un second tronçon 141, 141' selon l'axe de révolution R1, R2 de l'arbre de guidage 17, 17'.

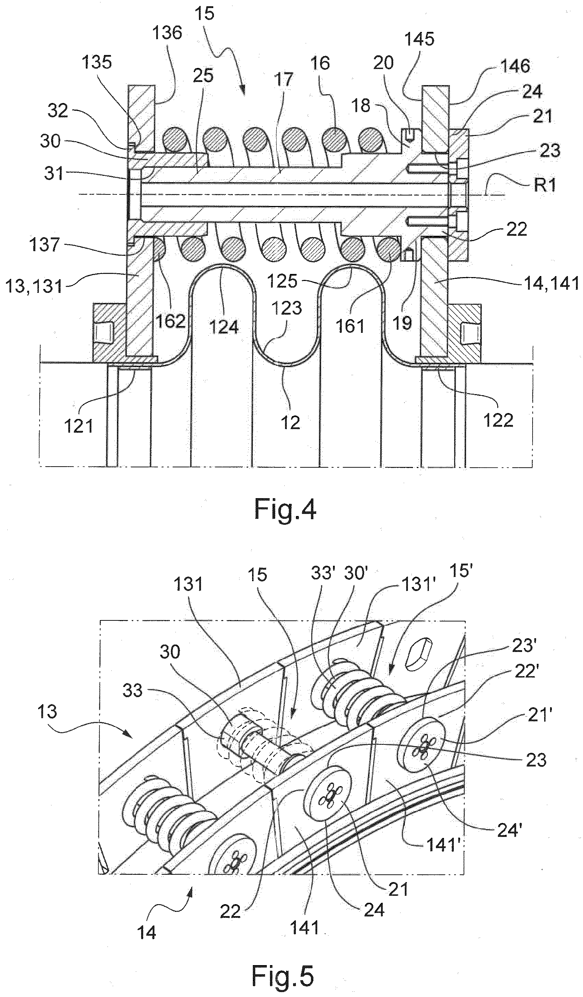

Tel que représenté à la figure 4, chaque arbre de guidage 17 peut comporter une tête 18 présentant un degré de liberté en rotation par rapport à la seconde bague de poussée 14, le degré de liberté en rotation étant autour d'un axe de rotation AXROT1 confondu avec l'axe de révolution R1.

La tête 18 peut alors comporter un premier épaulement 19 en appui d'une part contre une première extrémité 161 du ressort hélicoïdal 16 et d'autre part contre une première face 145 de ladite seconde bague de poussée 14.

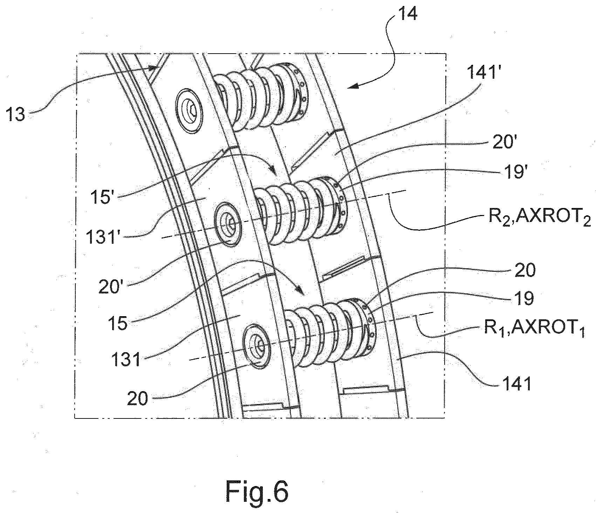

Tel que représenté à la figure 6, un tel premier épaulement 19, 19' peut comporter une pluralité de trous 20, 20' agencés radialement par rapport à l'axe de révolution R1, R2 et de manière équirépartie en azimut. Ces trous 20, 20' peuvent alors permettre à un opérateur d'actionner en rotation l'arbre de guidage 17, 17' autour de l'axe de rotation AXROT1, AXROT2 par rapport à la seconde bague de poussée 14 avec un outil non représenté pouvant par exemple se présenter sous la forme d'une tige ou d'une barre de manière à coopérer avec chaque trou 20, 20' d'un même arbre de guidage 17, 17', l'un après l'autre.

De plus et tel que représenté à la figure 5, chaque ensemble 15, 15' peut comporter une butée axiale 21, 21' solidarisée avec une portion cylindrique 22, 22' de la tête 18, 18'. Une telle portion cylindrique 22, 22' s'étend selon l'axe de révolution R1, R2 depuis le premier épaulement 19, 19'.

Cette portion cylindrique 22, 22' peut ainsi traverser un alésage cylindrique 23, 23' de forme complémentaire ménagé dans ladite seconde bague de poussée 14. En outre, une telle butée axiale 21, 21' comporte quant à elle un deuxième épaulement 24, 24' destiné à venir au contact d'une seconde face 146 de la seconde bague de poussée 14.

Une telle seconde face 146 peut être agencée parallèlement à la première face 145 et perpendiculairement à l'axe de révolution R1, R2.

De plus, un tel ensemble 15, 15' peut comporter un écrou 30, 30' présentant un alésage taraudé 31, 31' vissé avec une portion filetée 25, 25' de l'arbre de guidage 17, 17'. Un tel écrou 30, 30' est alors solidarisé avec la première bague de poussée 13 sans degré de liberté sous une réaction en traction transmise par l'arbre de guidage 17, 17' à l'écrou 30, 30'. En outre, une telle réaction en traction s'oppose à l'effort de compression transmis par le ressort hélicoïdal 16, 16' à la première bague de poussée 13 et à la seconde bague de poussée 14.

Ainsi un troisième épaulement 32 peut être ménagé sur l'écrou 30, 30' pour venir au contact d'une première face 135 de la première bague de poussée 13 et un ou plusieurs méplats 33, 33' peuvent être ménagés sur l'écrou 30, 30' pour coopérer avec un alésage 137 de forme complémentaire.

La première bague de poussée 13 peut également comporter une seconde face 136 sur laquelle une seconde extrémité 162 du ressort 16, 16' peut venir prendre appui pour transmettre un effort de compression.

Une telle seconde face 136 peut être agencée parallèlement à la première face 135 et perpendiculairement à l'axe de révolution R1, R2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, comme définie par les revendications suivantes.

## Revendications

1. Obturateur en ligne (1) comportant :
• une plaque d'obturation (2) mobile dans un plan (P) entre une position d'obturation interdisant une circulation fluidique dans une zone intérieure (3) dudit obturateur en ligne (1) et une position de circulation permettant ladite circulation fluidique selon une direction de circulation fluidique (C1), ladite plaque d'obturation (2) comportant une portion pleine pour interdire ladite circulation fluidique et une portion ajourée pour permettre ladite circulation fluidique,
• un corps (5) comportant un premier demi-corps (6) et un second demi-corps (7) agencés respectivement de part et d'autre dudit plan (P), lesdits premier et second demi-corps (6, 7) présentant respectivement un premier orifice (8) et un second orifice (9) permettant ladite circulation fluidique, et
• un système de serrage/écartement (10) permettant de serrer, et inversement, d'écarter au moins une pièce de serrage (11), ladite au moins une pièce de serrage (11) étant mobile par rapport au corps (5) suivant au moins un degré de liberté en translation selon une direction de translation (D1) parallèle à la direction de circulation fluidique (C1), ladite au moins une pièce de serrage (11) étant agencée entre ladite plaque d'obturation (2) et ledit premier demi-corps (6), ledit système de serrage/écartement (10) comportant un manchon d'étanchéité (12) déformable élastiquement s'étendant entre ledit premier demi-corps (6) et ladite au moins une pièce de serrage (11), ledit système de serrage/écartement (10) comportant une première bague de poussée (13) solidaire dudit premier demi-corps (6), une seconde bague de poussée (14) solidaire de ladite au moins une pièce de serrage (11), une pluralité d'ensembles (15, 15') déformables élastiquement en compression et agencés de manière équirépartie en azimut autour de ladite direction de translation (D1), chaque ensemble (15, 15') comportant un ressort hélicoïdal (16, 16') et un arbre de guidage (17, 17') comportant un axe de révolution (R1, R2) orienté parallèlement à ladite direction de translation (D1), ledit ressort hélicoïdal (16, 16') étant agencé entre ladite première bague de poussée (13) et ladite seconde bague de poussée (14), ledit ressort hélicoïdal (16, 16') étant agencé autour dudit arbre de guidage (17, 17'),
**caractérisé en ce que** ladite première bague de poussée (13) comporte plusieurs premiers tronçons (131, 131') agencés de manière équirépartie en azimut autour de ladite direction de translation (D1) et ladite seconde bague de poussée (14) comporte plusieurs seconds tronçons (141, 141') agencés de manière équirépartie en azimut autour de ladite direction de translation (D1).

2. Obturateur en ligne selon la revendication 1,
**caractérisé en ce que** ledit arbre de guidage (17, 17') comporte une tête (18, 18') présentant un degré de liberté en rotation par rapport à ladite seconde bague de poussée (14), ledit degré de liberté en rotation étant autour d'un axe de rotation (AXROT1, AXROT2) confondu avec ledit axe de révolution (R1, R2).

3. Obturateur en ligne selon la revendication 2,
**caractérisé en ce que** ladite tête (18, 18') comporte un premier épaulement (19, 19') en appui d'une part contre une première extrémité (161, 161') dudit ressort hélicoïdal (16, 16') et d'autre part contre une première face (145) de ladite seconde bague de poussée (14).

4. Obturateur en ligne selon la revendication 3,
**caractérisé en ce que** ledit premier épaulement (19, 19') comporte une pluralité de trous (20, 20') agencés radialement par rapport audit axe de révolution (R1, R2) et de manière équirépartie en azimut, ladite pluralité de trous (20, 20') permettant un actionnement en rotation dudit arbre de guidage (17, 17') autour dudit axe de rotation (AXROT1, AXROT2) et par rapport à ladite seconde bague de poussée (14) avec un outil.

5. Obturateur en ligne selon l'une quelconque des revendications 3 à 4,
**caractérisé en ce que** ledit au moins un ensemble (15, 15') comporte une butée axiale (21, 21') solidarisée avec une portion cylindrique (22, 22') de ladite tête (18, 18'), ladite portion cylindrique (22, 22') s'étendant selon ledit axe de révolution (R1, R2) depuis ledit premier épaulement (19, 19'), ladite portion cylindrique (22, 22') traversant un alésage cylindrique (23, 23') de forme complémentaire ménagé dans ladite seconde bague de poussée (14), ladite butée axiale (21, 21') comportant un deuxième épaulement (24, 24') au contact d'une seconde face (146) de ladite seconde bague de poussée (14), ladite seconde face (146) étant agencée parallèlement à ladite première face (145) et perpendiculairement audit axe de révolution (R1, R2).

6. Obturateur en ligne selon l'une quelconque des revendications 1 à 5,
**caractérisé en ce que** ledit au moins un ensemble (15, 15') comporte un écrou (30, 30') présentant un alésage taraudé (31, 31') vissé avec une portion filetée (25, 25') dudit arbre de guidage (17, 17'), ledit écrou (30, 30') étant solidarisé avec ladite première bague de poussée (13) sans degré de liberté sous une réaction en traction transmise par l'arbre de guidage (17, 17') à l'écrou (30, 30').

7. Obturateur en ligne selon l'une quelconque des revendications 1 à 6,
**caractérisé en ce que** chaque ensemble (15, 15') de ladite pluralité d'ensembles (15, 15') coopère avec un premier tronçon (131, 131') de ladite première bague de poussée (13) et un second tronçon (141, 141') de ladite seconde bague de poussée (14), ledit premier tronçon (131, 131') étant agencé en regard dudit second tronçon (141, 141') suivant ledit axe de révolution (R1, R2) dudit arbre de guidage (17, 17') dudit ensemble (15, 15').

8. Obturateur en ligne selon l'une quelconque des revendications 1 à 7,
**caractérisé en ce que** ledit manchon d'étanchéité (12) comporte une première portion annulaire (121) coopérant avec une première portion cylindrique (130) de ladite première bague de poussée (13) et une seconde portion annulaire (122) coopérant avec une seconde portion cylindrique (140) de ladite seconde bague de poussée (14).

## Patentansprüche

1. Inline-Absperrvorrichtung (1) mit:
• einer Absperrplatte (2), die in einer Ebene (P) zwischen einer Absperrposition, die einen Fluidstrom in einem Innenbereich (3) der Inline-Absperrvorrichtung (1) verhindert, und einer Durchflussposition, die den Fluidstrom in einer Fluidströmungsrichtung (C1) zulässt, beweglich ist, wobei die Absperrplatte (2) einen massiven Abschnitt zum Unterbinden des Fluidflusses und einen durchbrochenen Abschnitt zum Zulassen des Fluidflusses aufweist,
• einem Körper (5) mit einer ersten Körperhälfte (6) und einer zweiten Körperhälfte (7), die auf jeweils unterschiedlichen Seiten der Ebene (P) angeordnet sind, wobei die erste und die zweite Körperhälfte (6, 7) jeweils eine erste Öffnung (8) und eine zweite Öffnung (9) aufweisen, die den Fluidfluss zulassen, und
• einem Klemm-/Freigabesystem (10), das es ermöglicht, mindestens ein Klemmteil (11) zu klemmen und umgekehrt freizugeben, wobei das mindestens eine Klemmteil (11) in Bezug auf den Körper (5) in mindestens einem Freiheitsgrad in einer zur Strömungsrichtung (C1) parallelen Translationsrichtung (D1) beweglich ist, wobei das mindestens eine Klemmteil (11) zwischen der Absperrplatte (2) und der ersten Körperhälfte (6) angeordnet ist, wobei das Klemm-/Freigabesystem (10) eine elastisch verformbare Dichtungshülse (12) umfasst, die sich zwischen der ersten Körperhälfte (6) und dem mindestens einen Klemmteil (11) erstreckt, wobei das Klemm-/Spreizsystem (10) einen ersten Druckring (13), der fest mit der ersten Körperhälfte (6) verbunden ist, einen zweiten Druckring (14), der fest mit dem mindestens einen Klemmteil (11) verbunden ist, und eine Mehrzahl von unter Druck elastisch verformbaren Baugruppen (15, 15') umfasst, die in azimutaler Richtung gleichmäßig um die Translationsrichtung (D1) verteilt angeordnet sind, wobei jede Baugruppe (15, 15') eine Schraubenfeder (16, 16') und eine Führungswelle (17, 17') mit einer parallel zur Translationsrichtung (D1) ausgerichteten Rotationskörperachse (R1, R2) umfasst, wobei die Schraubenfeder (16, 16') zwischen dem ersten Druckring (13) und dem zweiten Druckring (14) angeordnet ist, und die Schraubenfeder (16, 16') um die Führungswelle (17, 17') angeordnet ist,
**dadurch gekennzeichnet, dass** der erste Druckring (13) mehrere erste Abschnitte (131, 131') aufweist, die in azimutaler Richtung gleichmäßig um die Translationsrichtung (D1) angeordnet sind, und der zweite Druckring (14) mehrere zweite Abschnitte (141, 141') aufweist, die in azimutaler Richtung gleichmäßig um die Translationsrichtung (D1) angeordnet sind.

2. Inline-Absperrvorrichtung nach Anspruch 1,
**dadurch gekennzeichnet, dass** die Führungswelle (17, 17') einen Kopf (18, 18') aufweist, der einen Drehfreiheitsgrad in Bezug auf den zweiten Druckring (14) aufweist, wobei der Drehfreiheitsgrad um eine Drehachse (AXROT 1, AXROT2) liegt, die mit der Rotationskörperachse (R1, R2) zusammenfällt.

3. Inline-Verschluss gemäß Anspruch 2,
**dadurch gekennzeichnet, dass** der Kopf (18, 18') eine erste Schulter (19, 19') aufweist, die einerseits an einem ersten Ende (161, 161') der Schraubenfeder (16, 16') und andererseits an einer ersten Fläche (145) des zweiten Druckrings (14) anliegt.

4. Inline-Absperrvorrichtung nach Anspruch 3,
**dadurch gekennzeichnet, dass** die erste Schulter (19, 19') eine Mehrzahl von Löchern (20, 20') aufweist, die radial zur Rotationskörperachse (R1, R2) angeordnet und azimutal gleichmäßig verteilt sind, wobei die Mehrzahl von Löchern (20, 20') eine Drehverstellung der Führungswelle (17, 17') um die Drehachse (AXROT1, AXROT2) und in Bezug auf den zweiten Druckring (14) mit einem Werkzeug ermöglicht.

5. Inline-Absperrvorrichtung nach einem der Ansprüche 3 bis 4,
**dadurch gekennzeichnet, dass** die mindestens eine Baugruppe (15, 15') einen axialen Anschlag (21, 21') aufweist, der mit einem zylindrischen Abschnitt (22, 22') des Kopfes (18, 18') verbunden ist, wobei sich der zylindrische Abschnitt (22, 22') entlang der Rotationskörperachse (R1, R2) von der ersten Schulter (19, 19') aus erstreckt, wobei der zylindrische Abschnitt (22, 22') eine zylindrische Bohrung (23, 23') von komplementärer Form durchquert, die in dem zweiten Druckring (14) ausgebildet ist, der axiale Anschlag (21, 21') eine zweite Schulter (24, 24') aufweist, die mit einer zweiten Fläche (146) des zweiten Druckrings (14) in Kontakt steht, und die zweite Fläche (146) parallel zur ersten Fläche (145) und senkrecht zur Rotationskörperachse (R1, R2) angeordnet ist.

6. Inline-Absperrvorrichtung nach einem der Ansprüche 1 bis 5,
**dadurch gekennzeichnet, dass** die mindestens eine Baugruppe (15, 15') eine Mutter (30, 30') mit einer Gewindebohrung (31, 31') aufweist, die mit einem Gewindeabschnitt (25, 25') der Führungswelle (17, 17') verschraubt ist, wobei die Mutter (30, 30') mit dem ersten Druckring (13) ohne Freiheitsgrad unter einer von der Führungswelle (17, 17') auf die Mutter (30, 30') übertragenen Zugkraft verbunden ist.

7. Inline-Absperrvorrichtung nach einem der Ansprüche 1 bis 6,
**dadurch gekennzeichnet, dass** jede der mehreren Baugruppen (15, 15') mit einem ersten Abschnitt (131, 131') des ersten Druckrings (13) und einem zweiten Abschnitt (141, 141') des zweiten Druckrings (14) zusammenwirkt, wobei der erste Abschnitt (131, 131') entlang der Rotationskörperachse (R1, R2) der Führungswelle (17, 17') der Baugruppe (15, 15') gegenüber dem zweiten Abschnitt (141, 141') angeordnet ist.

8. Inline-Absperrvorrichtung nach einem der Ansprüche 1 bis 7,
**dadurch gekennzeichnet, dass** die Dichtungshülse (12) einen ersten ringförmigen Abschnitt (121), der mit einem ersten zylindrischen Abschnitt (130) des ersten Druckrings (13) zusammenwirkt, und einen zweiten ringförmigen Abschnitt (122) aufweist, der mit einem zweiten zylindrischen Abschnitt (140) des zweiten Druckrings (14) zusammenwirkt.

## Claims

1. Inline shut-off member (1) comprising:
• a shutting plate (2) movable in a plane (P) between a shutting position prohibiting a fluid circulation in an inner zone (3) of said inline shut-off member (1) and a circulation position enabling said fluid circulation along a fluid circulation direction (C1), said shutting plate (2) comprising a solid portion for prohibiting said fluid circulation and a perforated portion to enable said fluid circulation,
• a body (5) comprising a first half-body (6) and a second half-body (7) arranged respectively on either side of said plane (P), said first and second half-bodies (6, 7) respectively having a first orifice (8) and a second orifice (9) enabling said fluid circulation, and
• a clamping/spacing system (10) making it possible to clamp, and conversely, space at least one clamping part (11), said at least one clamping part (11) being movable with respect to the body (5) along at least one degree of freedom in translation along a translation direction (D1) parallel to the fluid circulation direction (C1), said at least one clamping part (11) being arranged between said shutting plate (2) and said first half-body (6), said clamping/spacing system (10) comprising an elastically deformable sealing sleeve (12) extending between said first half-body (6) and said at least one clamping part (11), said clamping/spacing system (10) comprising a first thrust ring (13) secured to said first half-body (6), a second thrust ring (14) secured to said at least one clamping part (11), a plurality of elastically deformable assemblies (15, 15')
compressed and arranged azimuthally evenly distributed around said translation direction (D1), each assembly (15, 15') comprising a helical spring (16, 16') and a guiding shaft (17, 17') comprising a revolving axis (R1, R2) oriented parallel to said translation direction (D1), said helical spring (16, 16') being arranged between said first thrust ring (13) and said second thrust ring (14), said helical spring (16, 16') being arranged around said guiding shaft (17, 17'),
**characterised in that** said first thrust ring (13) comprises several first sections (131, 131') arranged azimuthally evenly distributed around said translation direction (D1) and said second thrust ring (14) comprises several second sections (141, 141') arranged azimuthally evenly distributed around said translation direction (D1).

2. Inline shut-off member according to claim 1,
**characterised in that** said guiding shaft (17, 17') comprises a head (18, 18') having a degree of freedom rotating with respect to said second thrust ring (14), said rotating degree of freedom being about an axis of rotation (AXROT1, AXROT2), combined with said revolving axis (R1, R2).

3. Inline shut-off member according to claim 2,
**characterised in that** said head (18, 18') comprises a first shoulder (19, 19') bearing, on the one hand, against a first end (161, 161') of said helical spring (16, 16') and on the other hand, against a first face (145) of said second thrust ring (14).

4. Inline shut-off member according to claim 3,
**characterised in that** said first shoulder (19, 19') comprises a plurality of holes (20, 20') arranged radially with respect to said revolving axis (R1, R2) and azimuthally evenly distributed, said plurality of holes (20, 20') enabling a rotatable actuation of said guiding shaft (17, 17') about said axis of rotation (AXROT1, AXROT2), and with respect to said second thrust ring (14) with a tool.

5. Inline shut-off member according to any one of claims 3 to 4,
**characterised in that** said at least one assembly (15, 15') comprises an axial abutment (21, 21') secured with a cylindrical portion (22, 22') of said head (18, 18'), said cylindrical portion (22, 22') extending along said revolving axis (R1, R2) from said first shoulder (19, 19'), said cylindrical portion (22, 22') passing through a complementarily-shaped cylindrical bore (23, 23') made in said second thrust ring (14), said axial abutment (21, 21') comprising a second shoulder (24, 24') in contact with a second face (146) of said second thrust ring (14), said second face (146) being arranged parallel to said first face (145) and perpendicularly to said revolving axis (R1, R2).

6. Inline shut-off member according to any one of claims 1 to 5,
**characterised in that** said at least one assembly (15, 15') comprises a nut (30, 30') having a threaded bore (31, 31') screwed with a threaded portion (25, 25') of said guiding shaft (17, 17'), said nut (30, 30') being secured with said first thrust ring (13) without degree of freedom under a traction reaction transmitted by the guiding shaft (17, 17') to the nut (30, 30').

7. Inline shut-off member according to any one of claims 1 to 6,
**characterised in that** each assembly (15, 15') of said plurality of assemblies (15, 15') engages with a first section (131, 131') of said first thrust ring (13) and a second section (141, 141') of said second thrust ring (14), said first section (131, 131') being arranged facing said second section (141, 141') about said revolving axis (R1, R2) of said guiding shaft (17, 17') of said assembly (15, 15').

8. Inline shut-off member according to any one of claims 1 to 7,
**characterised in that** said sealing sleeve (12) comprises a first annular portion (121) engaging with a first cylindrical portion (130) of said first thrust ring (13) and a second annular portion (122) engaging with a second cylindrical portion (140) of said second thrust ring (14).
